Europäisches Patentamt

(19) European Patent Office

Office européen des brevets

(11) Publication number: **0 019 980**
**B1**

## (12) EUROPEAN PATENT SPECIFICATION

(45) Date of publication of patent specification: **23.03.83**

(51) Int. Cl.³: **B 01 J 23/84, C 10 G 49/04**

(21) Application number: **80200494.5**

(22) Date of filing: **23.05.80**

(54) Method for the preparation of a sulphided fluorine-containing nickel-tungsten catalyst and process for the conversion of hydrocarbons using such a catalyst.

(30) Priority: **05.06.79 NL 7904382**

(43) Date of publication of application:
**10.12.80 Bulletin 80/25**

(45) Publication of the grant of the patent:
**23.03.83 Bulletin 83/12**

(84) Designated Contracting States:
**BE DE FR GB IT NL**

(56) References cited:
**FR - A - 2 144 794**
**FR - A - 2 334 414**
**GB - A - 928 761**
**US - A - 3 227 661**
**US - A - 3 639 272**

(73) Proprietor: **SHELL INTERNATIONALE RESEARCH MAATSCHAPPIJ B.V.**
**Carel van Bylandtlaan 30**
**NL-2596 HR Den Haag (NL)**

(72) Inventor: **Pott, Gerard Tjarko**
**Badhuisweg 3**
**NL-1031 CM Amsterdam (NL)**
Inventor: **Stuiver, Johannes Christiaan Marinus**
**Badhuisweg 3**
**NL-1031 CM Amsterdam (NL)**

(74) Representative: **Puister, Antonius Tonnis, Mr. et al,**
**P.O. Box 302**
**NL-2501 CH The Hague (NL)**

Courier Press, Leamington Spa, England

Method for the preparation of a sulphided fluorine-containing nickel-tungsten catalyst and
process for the conversion of hydrocarbons using such a catalyst.

The invention relates to a process for the preparation of a sulphided fluorine-containing nickel-tungsten catalyst.

Such catalysts and processes for their preparation are known from the Netherlands patent application 7317235 in the name of the Applicant. As starting material for the preparation of such catalysts certain alumina hydrogels are used. The catalysts are prepared therefrom either by incorporation of the metals and optionally fluorine into the alumina hydrogel followed by calcination, or by calcining the alumina hydrogel, incorporating the metals and at least part of the fluorine into the xerogel thus obtained, followed by calcination. The remainder of the fluorine is incorporated by in situ fluorination.

Such catalysts have been found to be suitable, inter alia, for the preparation of high viscosity index lubricating oils by hydrocracking a mixture of heavy hydrocarbons and for application in other processes in which hydrocarbons are converted at elevated temperature and pressure in the presence of hydrogen.

A process has now been found for the preparation of such catalysts which yields catalysts being substantially more active than those prepared by the known method. According to said process one of the steps in the catalyst manufacture consists of forming a tungsten- and aluminium-containing compound starting from a solution which contains a tungsten compound and an aluminium compound.

The invention therefore relates to a process for the preparation of a sulphided, fluorine-containing nickel-tungsten catalyst, in which process a solution containing a tungsten compound and an aluminium compound is evaporated to dryness and the resultant product is calcined, impregnated with a nickel compound, sulphided and fluorinated.

The atomic Al/W ratio of the aluminium and tungsten compound-containing solution preferably lies between 0.30 and 1. If a ratio outside this range is chosen, the catalysts obtained do not exhibit optimal catalytic activity.

Examples of tungsten compounds which can be used in the said solution are ortho-tungstic acid, meta-tungstic acid, ammonium meta-tungstate. Ammonium meta-tungstate is preferably used, since the ammonium is removed from the catalyst material as $NH_3$ during the calcination treatment.

Examples of aluminium compounds which can be used in the said solution are aluminium nitrate, aluminium alpha-ethylacetoacetate, aluminium propoxide, aluminium isopropoxide, aluminium lactate. Most preference is given to aluminium nitrate, since the nitrate is removed from the catalyst material as nitrous vapours during the calcination treatment.

For the process according to the invention use is very suitably made of an aqueous solution or, if desired, a solution in a polar organic solvent. Examples of suitable polar organic solvents are: methanol, ethanol, acetone, acetonitrile and diethyl ether.

It is also possible to prepare excellent catalysts by adding a heat-resistant carrier material to the tungsten and aluminium compound-containing solution. The carrier material is then impregnated with said solution.

For this purpose an alumina- and/or silica-containing carrier material is preferably used, since said material is inert and stable and also readily available. It is also possible to use other carrier materials with corresponding properties.

The calcination temperature is preferably between 500 and 700°C. Calcination temperatures lower than 500°C give an aluminium-tungsten catalyst having a large surface area but a structure which may collapse during sulphidation under usual conditions, which results in a catalyst having a small surface area and low activity.

Although calcination at temperatures above 700°C results in stable catalysts, they may have too small a surface area.

The impregnation with a nickel compound is very suitably carried out with the aid of a solution (preferably an aqueous solution) of a nickel compound, in particular, a nickel salt, such as nickel nitrate.

The sulphidation of the catalysts may be carried out by any method known in the art for the sulphidation of catalysts, for example by contacting the catalysts with sulphur-containing gas such as a mixture of hydrogen and hydrogen sulphide. Another method is contacting the catalyst with a sulphur-containing hydrocarbon oil such as a sulphur-containing gas oil.

The fluorination of the catalyst can be carried out by any known method and for example by in-situ fluorination according to the process described in the Netherlands patent application 7317235 in the name of the Applicant.

This in-situ fluorination of a catalyst is carried out by adding, before or during the initial phase of the process in which the catalyst is used, a suitable fluorine compound to the gas and/or liquid stream which is passed over the catalyst.

As fluorination agent use is preferably made of an organic fluorine compound. Examples of very suitable organic fluorine compounds for said purpose are ortho-fluorotoluene and difluoroethane.

The catalysts prepared according to the present invention have been found to be more suitable for use in processes for the conversion of hydrocarbons at elevated temperature and pressure and in the

**0 019 980**

presence of hydrogen than catalysts prepared by known methods. The invention therefore also relates to a process for the conversion of hydrocarbons.

Examples of such processes in which the use of the catalysts according to the invention is of advantage are the following:

1. the hydrocracking of heavy hydrocarbon oils, such as flashed distillates for the preparation of light hydrocarbon distillates such as gasolines and kerosines;

2. the hydrogenation of aromatics present in light hydrocarbon oil distillates such as kerosines;

3. the hydro-isomerization or hydrocracking of straight-chain paraffins present in light hydrocarbon oil distillates in order to raise the octane number of said distillates;

4. the preparation of high viscosity index lubricating oils by a catalytic hydrogen treatment of heavy hydrocarbon oils such as deasphalted oils, and/or waxy distillates and/or waxes.

Especially for the latter process the catalysts according to the invention have been found to be particularly suitable.

In the latter case very suitable process conditions are as follows:

| | |
|---|---|
| pressure | 10—200 bar |
| temperature | 300—450°C |
| space velocity | 0.5—10 kg feed/l of cat./h |
| $H_2$/oil ratio | 100—5000 Nl hydrogen/kg of feed |

The invention will be further illustrated with reference to the following Examples.

Example 1

An aqueous solution of 100 g of ammonium meta-tungstate and 100 g of aluminium nitrate in 750 ml of water was evaporated to dryness. The residue was subsequently calcined at 600°C for 24 hours.

The resultant $Al_2(WO_4)_3$, the yield of which was 106 g, was impregnated with 22 g of nickel nitrate, dried at 120°C and sulphided at 450°C and 10 bar by means of 10% of hydrogen sulphide in hydrogen yielding a catalyst material still to be fluorinated.

The fluorination was carried out in situ by passing a heavy gas oil to which ortho-fluorotoluene had been added, at a temperature of 450°C and a pressure of 48 bar in the presence of hydrogen, over the catalyst material which was present as a fixed bed in a cylindrical reactor (catalyst a).

Example 2

Two catalysts were prepared, in one case $Al_2(WO_4)_3$ being deposited on silicon oxide and in the other on alumina as carrier.

To prepare these catalysts 100 g of carrier were first of all impregnated with an aqueous solution of 322 g of ammonium meta-tungstate and 319 g of aluminium nitrate in a quantity of water corresponding to the pore volume of the carrier.

The product was subsequently evaporated to dryness at 120°C and subjected to a calcination treatment at 600°C for 24 hours. The product was then impregnated with an aqueous solution containing 70 g of nickel nitrate, and sulphided.

To test the activity of these catalysts benzene was subjected to a hydrogenation treatment at a pressure of 48 bar, an $H_2/C_6H_6$ molar ratio of 35 and an $H_2/H_2S$ molar ratio of 99. The fluorination was carried out in situ by adding 0.1% by weight of ortho-fluorotoluene to the benzene feed (catalysts b and c).

The hydrogenation activity of the catalysts is expressed by the reaction rate constant k of the hydrogenation reaction.

In view of the results stated in the Table it is clear that the hydrogenation activity of the catalysts according to the invention (a, b and c) is substantially improved in respect of the activities of the control catalysts d and e (fluorinated in situ) stated in the Table. These (commercially available) catalysts are prepared by impregnating an alumina carrier with a solution of a nickel salt and a tungstate.

3

TABLE

Activities of some $Al_2(WO_4)_3$-containing catalysts with and without a carrier, expressed as the reaction rate constant k of the hydrogenation reaction of benzene compared with those of some $Al_2O_3$-containing catalysts

$T = 400°C$, $P = 48$ bar, $H_2/C_6H_6$ molar ratio $= 35$, $H_2/H_2S$ molar ratio $= 99$

| Cat. | Composition | ml. $g^{-1k}\,h^{-1}$ |
|------|-------------|------------------------|
| a | $Ni/Al_2(WO_4)_3$ | |
| | $Ni/W = 6/100$ w/w | 3.5 |
| b | $Ni/Al_2(WO_4)_3/SiO_2$ [a] | |
| | 14 Ni/23.4 Al/234 W/100 pbw $SiO_2$ | 4.5 |
| c | $Ni/Al_2(WO_4)_3\gamma$-$Al_2O_3$ [b] | |
| | 9 Ni/15, 6Al/156W/100 pbw $Al_2O_3$ | 3.5 |
| | In comparison | |
| d | 100 $Al_2O_3$/15Ni/39W pbw | 2.7 |
| e | 100 $Al_2O_3$/9Ni/41W pbw | 1.8 |

[a] surface area $SiO_2 = 330$ m²/g
[b] surface area $Al_2O_3 = 205$ m²/g

**Claims**

1. A process for the preparation of a sulphided, fluorine-containing nickel-tungsten catalyst, characterized in that a solution containing a tungsten compound and an aluminium compound is evaporated to dryness and the resultant product is calcined, impregnated with a nickel compound, sulphided and fluorinated.

2. A process as claimed in claim 1, characterized in that the calcination is carried out at a temperature in the range of 500—700°C.

3. A process as claimed in claims 1 and 2, characterized in that the atomic ratio Al/W of the aluminium and tungsten compound-containing solution lies in the range of 0.30—1.

4. A process as claimed in any one or more of the preceding claims, characterized in that the tungsten compound used is ammonium meta-tungstate.

5. A process as claimed in any one or more of the preceding claims, characterized in that the aluminium compound used is aluminium nitrate.

6. A process as claimed in any one or more of the preceding claims, characterized in that a heat-resistant carrier material is added to the tungsten and aluminium compound-containing solution.

7. A process as claimed in claim 6, characterized in that alumina-containing carrier material is added.

8. A process as claimed in any of the preceding claims, characterized in that silica-containing carrier material is added.

9. A process for the conversion of hydrocarbons at elevated temperature and pressure in the presence of hydrogen in which the hydrocarbons are contacted with a sulphided fluorine-containing nickel-tungsten catalyst, characterized in that use is made of a catalyst as produced by a process according to any of claims 1 to 8.

10. A process as claimed in claim 9, characterized in that high viscosity index lubricating oils are prepared from deasphalted residual oils, and/or waxy distillates and/or waxes by contacting them under hydrogenation conditions with a catalyst as produced by a process according to any of claims 1 to 8.

**Revendications**

1. Un procédé pour la préparation d'un catalyseur nickel-tungstène fluoré sulfuré, caractérisé en ce qu'une solution contenant un composé du tungstène et un composé de l'aluminium est évaporée à sec et le produit résultant est calciné, imprégné d'un composé du nickel, sulfuré et fluoré.

2. Un procédé selon la revendication 1, caractérisé en ce que la calcination est effectuée à une température comprise entre 500 et 700°C.

**0 019 980**

3. Un procédé selon l'une des revendications 1 et 2, caractérisé en ce que le rapport atomique Al/W de la solution contenant le composé de l'aluminium et du tungstène est compris entre 0,30 et 1.

4. Un procédé selon une ou plusieurs quelconques des revendications précédentes, caractérisé en ce que le composé du tungstène utilisé est le méta-tungstate d'ammonium.

5. Un procédé selon une ou plusieurs quelconques des revendications précédentes, caractérisé en ce que le composé de l'aluminium utilisé est le nitrate d'ammonium.

6. Un procédé selon une ou plusieurs quelconques des revendications précédentes, caractérisé en ce qu'on ajoute une matière de support résistant à la chaleur à la solution contenant le composé du tungstène et de l'aluminium.

7. Une procédé selon la revendication 6, caractérisé en ce qu'on ajoute une matière de support contenant de l'alumine.

8. Une procédé selon l'une quelconque des revendications précédentes, caractérisé en ce qu'on ajoute une matière de support contenant de la silice.

9. Une procédé pour la conversion d'hydrocarbures à température et pression élevées en présence d'hydrogène dans lequel les hydrocarbures sont mis en contact avec un catalyseur nickel-tungstène fluoré sulfuré, caractérisé en ce qu'on utilise un catalyseur tel que produit par un procédé selon l'une quelconque des revendications 1 à 8.

10. Un procédé selon la revendication 9, caractérisé en ce qu'on prépare des huiles lubrifiantes d'un indice de viscosité élevé à partir d'huiles résiduelles désasphaltées et/ou de distillats cireux et/ou de cires en les mettant en contact dans des conditions d'hydrogénation avec un catalyseur tel que produit par un procédé selon l'une quelconque des revendications 1 à 8.

**Patentansprüche**

1. Ein Verfahren zum Herstellen eines sulfidierten, fluorhaltigen Nickel-Wolfram-Katalysators, dadurch gekennzeichnet, daß eine eine Wolframverbindung und eine Aluminiumverbindung enthaltende Lösung bis zur Trockenheit verdampft und das entstandene Produkt calciniert, mit einer Nickelverbindung imprägniert, sulfidiert und fluoriert wird.

2. Ein Verfahren wie in Anspruch 1 beansprucht, dadurch gekennzeichnet, daß die Calcinierung bei einer Temperatur im Bereich von 500 bis 700° C erfolgt.

3. Ein Verfahren wie in Anspruch 1 und 2 beansprucht, dadurch gekennzeichnet, daß das atomare Verhältnis von Al/W der die Aluminium- und Wolframverbindung enthaltenden Lösung im Bereich von 0,30 bis 1 liegt.

4. Ein Verfahren wie in irgendeinem oder mehreren der vorstehenden Ansprüche beansprucht, dadurch gekennzeichnet, daß die verwendete Wolframverbindung Ammonium-Metawolframat ist.

5. Ein Verfahren wie in iregendeinem oder mehreren der vorangehenden Ansprüche beansprucht, dadurch gekennzeichnet, daß die verwendete Aluminiumverbindung Aluminiumnitrat ist.

6. Ein Verfahren wie in irgendeinem oder mehreren der vorangehenden Ansprüche beansprucht, dadurch gekennzeichnet, daß ein wärmefestes Trägermaterial der eine Wolfram- und Aluminiumverbindung enthaltenden Lösung zugesetzt wird.

7. Ein Verfahren wie in Anspruch 6 beansprucht, dadurch gekennzeichnet, daß aluminiumoxidhaltiges Trägermaterial zugesetzt wird.

8. Ein Verfahren wie in irgendeinem der vorangehenden Ansprüche beansprucht, dadurch gekennzeichnet, daß siliciumdioxidhaltiges Trägermaterial zugesetzt wird.

9. Ein Verfahren zur Umwandlung von Kohlenwasserstoffen bei erhöhter Temperatur und erhöhten Druck in Gegenwart von Wasserstoff, in welchem die Kohlenwasserstoffe mit einem sulfidierten fluorhaltigen Nickel-Wolfram-Katalysator in Berührung gebracht werden, dadurch gekennzeichnet, daß ein durch ein Verfahren gemäß irgendeinem der Ansprüche 1 bis 8 hergestellter Katalysator verwendet wird.

10. Ein Verfahren wie in Anspruch 9 beansprucht, dadurch gekennzeichnet, daß Schmieröle mit hohem Viskositätsindex aus entasphaltierten Rückstandsölen und/oder wachsartigen Destillaten und/oder Wachsen dadurch hergestellt werden, daß man sie unter Hydrierungsbedingungen mit einem durch ein Verfahren gemäß irgendeinem der Ansprüche 1 bis 8 hergestellten Katalysator in Berührung bringt.